# EUROPEAN PATENT SPECIFICATION

(11) **EP 2 588 993 B1**
(45) Date of publication and mention of the grant of the patent: **08.01.2020**
(21) Application number: 11803968.4
(22) Date of filing: 12.05.2011
(51) Int. Cl.: G06K 7/10, G06K 9/18, G06K 7/14, G06K 9/03, G06K 9/20

(54) **ADAPTIVE DATA READER SYSTEM AND METHOD OF OPERATING**
ADAPTIVES DATENLESEGERÄTSYSTEM UND BETRIEBSVERFAHREN DAFÜR
SYSTÈME DE LECTEUR DE DONNÉES ADAPTATIF ET PROCÉDÉ DE FONCTIONNEMENT

(30) Priority: 30.06.2010 US 360290 P
(43) Date of publication of application: 08.05.2013
(73) Proprietor: Datalogic USA, Inc., Eugene, OR 97402-9120 (US)
(72) Inventor: GAO, WenLiang, Eugene, OR 97402 (US); CHERRY, Craig, D., Eugene, OR 97402 (US)
(74) Representative: Schaumburg und Partner Patentanwälte mbB
(86) International application number: PCT/US2011/036295
(87) International publication number: WO 2012/005809

(56) References cited:
- WO-A1-2009/005789
- KR-A- 20070 063 899
- KR-A- 20090 110 245
- US-A1- 2006 163 355
- US-A1- 2009 167 490
- US-A1- 2010 157 086
- US-B1- 6 906 699

## Description

### Related Applications

This application claims priority to U.S. provisional Application No. 61/360,290 filed on June 30, 2010, and having as publication number US2012000982 A1.

### Background

Optical codes, such as barcodes and other machine-readable indicia, appear in various places in a variety of applications. There are a variety of such optical codes, including: linear barcodes (e.g., UPC code), 2D codes including stacked barcodes (e.g., PDF-417 code), and matrix codes (e.g., Datamatrix code, QR code, or Maxicode). Businesses have begun sending optical codes to customers who display such optical codes on a portable electronic device, such as a mobile telephone, personal digital assistant, palm, tablet, or laptop computer, or other suitable device having an electronic display, such as a liquid crystal display (LCD). For example, an airline passenger may display an optical code on a portable electronic device for an airline employee to read using a data reader as verification of the passenger's ticket. Or, a customer in a store may display an optical code on a portable electronic device for a cashier to read using a data reader to redeem a coupon. Optical codes are also included on other items having highly, or relatively highly, reflective surfaces, for example, but not limited to, identification (ID) cards, aluminum cans, and objects in plastic packaging.

The present inventors have recognized that optical codes presented on, or under, a highly, or relatively highly, reflective surface are typically difficult to decode using general-purpose data readers. For example, the present inventors have recognized that general-purpose data readers commonly use artificial illumination to illuminate an object bearing an optical code to create an image of the optical code having sufficient contrast for decoding the optical code. The present inventors have also recognized that highly, or relatively highly, reflective surfaces bearing optical codes commonly reflect a large amount of such artificial illumination resulting in a saturated, or partially saturated, image that does not have sufficient contrast for decoding the optical code because all, or portions, of the image appear light, or white. Thus, the present inventors have identified a need for a general-purpose data reader that has greater versatility in handling reading of optical codes appearing on (or behind) highly, or relatively highly, reflective surfaces.

From the US patent application published under the publication number US 2006/0163355 A1, a data reader is known having two different illumination sources and capturing a first image of a target and a second image of a target. For processing an image for decoding an optical code, either a non-saturated image is picked from the first and second image after these were captured, or the first and the second image are processed to create a combined image of the optical code suitable for processing.

### Summary of the invention

It is an object of the invention to create a method and a system providing automatic adjustment of operating parameters so that a non-saturated set of images can be captured qualifying for processing in order to decode an optical code.

This and other objects are achieved by the features claimed in the method claim 1 and system claim 11. Advantageous further embodiments are claimed in the dependent claims.

Methods and systems are disclosed for improved reading of optical codes regardless of whether the optical code is presented on a highly reflective or other surface.

In a preferred system/method, one or more images of an item bearing an optical code are captured and the captured images are analyzed to determine whether the item has a highly, or relatively highly, reflective surface or not. Based on such a determination, operating parameters of the system, such as the gain, exposure time, direction of illumination, and amount of illumination, are preferably automatically adjusted by the system to capture a subsequent image of the item where the subsequent image has sufficient contrast to decode the optical code. The subsequent image may include a plurality of images, and different operating parameters may be used to capture several, or each, of the plurality of images based on the determination of whether the item has a highly, or relatively highly, reflective surface or not.

Additional aspects and advantages will be apparent from the following detailed description of preferred embodiments, which proceeds with reference to the accompanying drawings.

### Brief Description of the Drawings

Fig. 1 is a schematic view of an exemplary data reader.

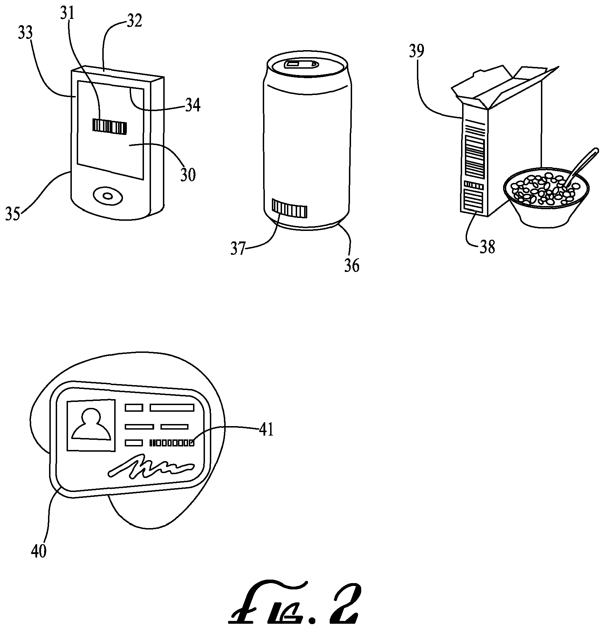

Fig. 2 is a schematic view of exemplary items bearing optical codes.
Fig. 3 is a flow chart of a preferred method.
Fig. 4 is a flow chart of another preferred method.
Fig. 5 is a flow chart of another preferred method.
Fig. 6 is a flow chart of another preferred method.
Fig. 7 is an exemplary illustration of an image of an item having a relatively highly reflective surface taken by a data reader using its own illumination source.
Fig. 8 is an exemplary illustration of an image of an item having a less relatively highly reflective surface than the item of Fig. 7 taken by a data reader using its own illumination source.
Fig. 9 is an exemplary histogram of the image of the item of Fig. 7.
Fig. 10 is an exemplary histogram of the image of the item of Fig. 8.
Fig. 11 is an exemplary illustration of an image of an item having a relatively highly reflective surface taken by a data reader using adjusted operating parameters, such as turning off its own illumination source.

### Detailed Description of Preferred Embodiments

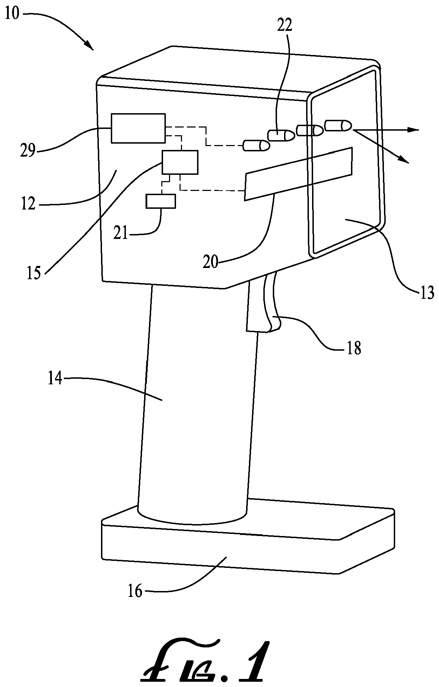

FIG. 1 is a diagrammatic view of a data reader 10 in accordance with a first embodiment. Preferably, the data reader 10 includes a processor 15 that is programmed to analyze an image scene to determine whether it is advantageous to change one or more operating parameters of the data reader 10. Such image analysis could occur for every frame captured by an imager 20, or alternately, may not occur for every frame, for example, image analysis may occur on a periodic basis.

The data reader 10 is schematically depicted as a presentation scanner suitable for reading optical codes, symbols, or other items. The data reader 10 includes a head portion 12 attached to a handle or stand portion 14, with the handle or stand portion 14 mounted onto a base 16. Data reader 10 may operate as a presentation scanner being self-supported on a horizontal surface or fixed/mounted to a wall or other surface. The data reader 10 is self-supporting (i.e., freestanding) on the base 16 making it usable in a hands free mode of operation. The data reader 10 may also be grasped about the handle and operated in a hand-held or portable mode. In any of a mounted, hands-free, or hand-held mode, data reading may be activated by actuation of the trigger 18, automatically by the processor 15 detecting the presence of an item within a scan volume in front of window 13, or by always being in a capture and decode images mode as long as the data reader 10 is in a scanning mode, or other suitable process. The data reader 10 may have other suitable forms. An optical code, such as optical codes 31, 37, 38, or 41, on an item such as an electronic display screen 30, beverage can 36, cereal box 39, ID card 40, or other suitable item may be read by presenting the item bearing the optical code into a data read volume in front of the window 13. The data reader 10 includes an illumination source 22 comprised in this embodiment of four LEDs arranged in a line above the imager 20. Preferably, the illumination source 22 illuminates the optical code on the item presented to the data reader 10.

The data reader 10 preferably comprises an imager 20 such as a complementary metal oxide semiconductor (CMOS) imager. Alternately, a charged couple device (CCD) or other suitable imager may be used. The imager 20, alone or together with logic components such as a complex programmable logic device (CPLD) or a field-programmable gate array (FPGA), is coupled to the processor 15, which, among other functions, is preferably programmed to control operating parameters of the data reader 10 as discussed in detail below. Processor 15 is also preferably programmed to read and decode optical codes or other symbols or imaged items. A CMOS imager has a field of view including the read volume within which a target item is preferably presented for imaging. A CMOS imager may comprise an active-pixel imaging sensor with a global shutter, such as a model MT9V022 sensor sold by Aptina Imaging of San Jose, CA, USA, or may operate on a rolling basis.

The processor 15 may comprise any suitable digital processor, such as a low-power DSP core or ARM core processor. In preferred embodiments, processor 15 comprises an ARM9 processor AT91SAM9G20 sold by Atmel of San Jose, CA, USA, or OMAP processor sold by Texas Instruments of Dallas, Tex., USA or an i.MX1 series processor (such as the MC9328MX1 processor) sold by Freescale Semiconductor, Inc. of Austin, Tex., USA. Alternately, multiple processors or sub-processors or other types of processor electronics such as comparators or other specific function circuits may be used alone or in combination. For the purposes of this description, the term processor is meant to include any of these combinations.

The illumination source 22 preferably comprises a collection of LEDs, for example, infrared or visible spectrum LEDs, but may alternatively comprise another suitable light source, such as a lamp or laser diode. The illumination sources may be coupled to and controlled by the processor 15, or may be remotely mounted and powered. A power supply circuit 29 is preferably provided for energizing the LEDs.

A memory 21, such as a flash memory, random access memory, or other suitable memory, communicates with processor 15. Alternately, memory 21 may be integrated with processor 15.

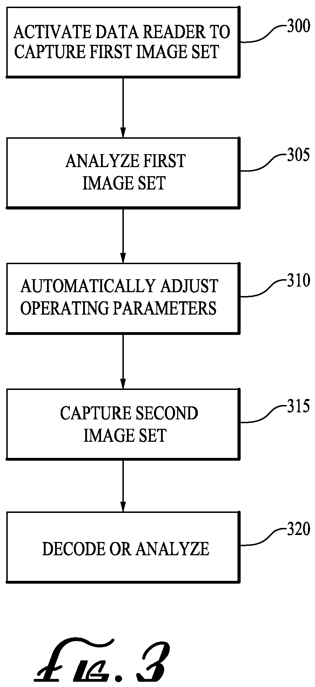

Figure 3 is a flow chart of a preferred method for operating data reader 10 to capture and decode an optical code. At step 300, data reader 10 is activated, preferably by processor 15 detecting an item, such as electronic device 32, within a read volume or by activation of trigger 18, to capture a first set of images of the item bearing an optical code, such as optical code 31. The first set of images may include only one image, but preferably includes two, three, four, or five images. Alternately, data reader 10 may continuously be on, i.e., operate or scan continuously.

In one embodiment, data reader 10 is preferably activated upon detecting an object within a read volume and determining that the object is relatively stationary within the read volume for one or more image frames. Determining whether an object is relatively stationary within a read volume may be accomplished in a variety of manners. For example, a pixel-by-pixel grayscale difference for two images may be obtained to create an absolute grayscale difference for the two images. Such an absolute difference is preferably compared against a configurable threshold value, which may be about 15% to about 20%, or other suitable value, to determine whether an object moved from one image to the next. If the difference is lower than the configurable threshold value, then processor 15 determines that an object is relatively stationary.

Alternately, or in addition, whether an item is positioned in a portion of a read volume such as a near field or far field, may be determined. For example, an average grayscale value may be obtained for an image and compared to two thresholds. Preferably, for an eight bit imager, an average grayscale of 29 or less indicates an object is in a far field, and an average grayscale of 43 or higher indicates an object is in a near field. A separation between the two thresholds is preferably included to reduce the likelihood that a data reader will rapidly switch between a near field mode and a far field mode when an object is near the intersection of the two fields. Preferably, data reader 10 is set to the near field mode when an average grayscale value falls between the two thresholds and the previous average grayscale value was used to set or keep the data reader 10 in the near field mode. Likewise, data reader 10 is preferably set to the far field mode when an average grayscale value falls between the two thresholds and the previous average grayscale value was used to set or keep the data reader 10 in the far field mode.

In one embodiment, data reader 10 uses a set of operating parameters that was used to capture the most recent images of a previous item as an initial set of operating parameters. In other embodiments, data reader 10 uses a predetermined set of operating parameters as an initial set of operating parameters. In other embodiments, data reader 10 may use a predetermined set of operating parameters as an initial set of operating parameters, adjust operating parameters based on image scene analysis as needed, and return to using the predetermined set of operating parameters when presence of an object in the read volume is not detected, or after a timeout occurs for one or more image frames. A predetermined set of operating parameters may be set by the manufacturer and stored in memory 21 communicating with processor 15, for example. Operating parameters preferably include at least the amount of gain for imager 20, the exposure duration for imager 20, and the amount of illumination provided by illumination source 22. Alternately, other suitable operating parameters may be adjusted, such as illumination direction or angle, for example.

The first set of images of an item, such as the display screen 30 of an electronic device 32, are analyzed at step 305. Data reader 10 preferably uses processor 15 to determine whether an item is part of a recognized class. One or more recognized classes are preferably stored in memory 21. One preferred recognized class includes items bearing an optical code, or capable of bearing an optical code, on or under a relatively highly reflective surface. Another exemplary class includes items bearing an optical code, or capable of bearing an optical code, on or under a highly reflective surface. Another exemplary class includes items bearing an optical code, or capable of bearing an optical code, on or under either a relatively highly reflective surface or a specular surface. Preferably, a relatively highly reflective surface has a reflection coefficient of about 30% or higher. Alternately, a specular surface has a surface roughness average (Ra) of less than 0.0125 microns. Alternately, a relatively highly reflective surface has a height variation of the surface texture that is considerably smaller than the wavelength of visible light, for example, a surface meeting the definition specified in ISO 10110-8. A highly reflective surface is preferably more reflective than a relatively highly reflective surface.

For example, processor 15 may analyze the first set of images to determine whether an imaged item is an electronic device having a display screen. Alternately, processor 15 may analyze the first set of images to determine whether an imaged item is an identification card, such as a driver's license, reward card, etc. Alternately, processor 15 may analyze the first set of images to determine whether an imaged item is a different type of relatively highly reflective object, such as a glass or aluminum beverage container, such as can 36, a plastic bag or other shiny plastic package, or other suitable object. A recognized class may include one or more of the foregoing (electronic device, identification card, other type of relatively highly reflective objects such as a soda can), or may include other suitable objects.

Processor 15 may use any suitable technique for analyzing the first set of images. One exemplary technique for determining whether an item is an electronic device, such as electronic device 32 having a display screen (e.g., display screen 30), is to seek a geometric shape, such as shape 34, nested within a similar geometric shape, such as shape 35. Many electronic device display screens are rectangular in shape, and the housing for such display screens is commonly rectangular, or substantially rectangular. By analyzing the first set of images to detect a shape nested within a similar shape, processor 15 may be programmed to determine that an item having the nested shape is an electronic device with a display screen. Alternately, processor 15 may run a program, algorithm, or image analysis process, such as SentiSight 2.1 by Neurotechnology of Vilnius, Lithuania, the scale invariant feature transformation, for example, as described by David G. Lowe in "Object Recognition from Local Scale-Invariant Features," Proceedings of the International Conference on Computer Vision, Corfu, Greece, September, 1999 and in "Local Feature View Clustering for 3D Object Recognition," Proceedings of the Institute of Electrical and Electronics Engineers, Inc., Conference on Computer Vision and Pattern Recognition, Kauai, HI, December 2001, both of which are fully incorporated herein by reference, the rotation invariant transformation method, the speeded up robust features method, or other suitable method to recognize items appearing in the read volume.

At step 310, the processor 15 automatically adjusts the operating parameters the data reader 10 uses to capture images with the imager 20. Such automatic adjustment is preferably based on the determination of whether an item, such as electronic device 32, is in the recognized class or not. If the item is determined not to be in the recognized class the processor 15 preferably establishes an initial set of operating parameters for use with items outside the recognized class, for example, cereal box 39. If the item is determined to be in the recognized class the processor 15 preferably establishes a secondary set of operating parameters for use with items in the recognized class, for example, electronic device 32 or soda can 36.

Alternately, a combination of the initial and secondary sets of operating parameters may be established for use. For example, in one embodiment the processor 15 automatically adjusts the operating parameters to enable imager 20 to capture subsequent images at step 315 using the initial set of operating parameters for a majority of image captures and the secondary set of operating parameters for a minority of image captures when an item is determined not to be in the recognized class. The processor 15 also automatically adjusts the operating parameters to enable imager 20 to capture subsequent images at step 315 using the secondary set of operating parameters for a majority of image captures and the initial set of operating parameters for a minority of image captures when an item is determined to be in the recognized class. In a preferred embodiment, a majority of image captures at step 315 is about 75% of the captured images and a minority of image captures at step 315 is about 25% of the captured images. Initial and secondary sets of operating parameters may be automatically adjusted using (i) predefined parameters stored in a memory, (ii) parameters that are dynamically created in response to analysis of the first set of images, the second set of images, or both sets of images, or (iii) a combination of predefined and dynamically created operating parameters.

Other majority / minority percentages, such as, but not limited to, 51%-49%, 60%-40%, 70%-30%, 80%-20%, and 90%-10% may be used in other embodiments. The type or identity of an imaged item may be determined by processor 15 as described below, as well as determining whether the imaged item is in a recognized class. Based on the type or identity of the item, whether the item is in a recognized class, or both, it may be advantageous to change the majority / minority percentages. For example, for an item with a slightly reflective surface, i.e., less reflective than a relatively highly reflective surface, it may be beneficial to have the majority / minority percentages relatively close, such as 51%-49% or 60%-40%, to efficiently capture an image of the item with sufficient contrast to decode an optical code. As another example, for an item with either a relatively non-reflective surface or a highly reflective surface (a highly reflective surface being more reflective than a relatively highly reflective surface), it may be beneficial to have the majority / minority percentages relatively far apart, such as 80%-20% or 90%-10%, to efficiently capture an image of the item with sufficient contrast to decode an optical code.

In a preferred embodiment, an initial set of operating parameters is set by the manufacturer, stored in memory 21, and may act as a default set of operating parameters, for example, by being established as the operating parameters for use each time data reader 10 is powered on. Such an initial set of operating parameters preferably includes a baseline gain and exposure time for imager 20, and a baseline illumination amount for light source 22. Preferably, a secondary set of operating parameters includes an increased gain for the imager 20, an increased exposure time for the imager 20, or both. A secondary set of operating parameters also preferably includes a decreased illumination amount for light source 22, which may be decreased to the point of being turned off. The amount of illumination provided by light source 22 may be decreased by lessening the intensity (lumens) of light provided, by shortening the duration for which light source 22 is activated, or both. Such a secondary set of operating parameters is preferably stored in memory 21, but may be dynamically created by processor 15 in response to image analysis.

At step 315 a second set of images of an item, such as electronic device 32, is captured by data reader 10 using the automatically adjusted operating parameters. The second set of images preferably includes from two to five images, but may include only one image. At step 320 an optical code 31 borne on display screen 30 is decoded, preferably by processor 15 or by a suitable processor operatively connected to processor 15. In an alternate embodiment, an attempt to decode the optical code 31 borne on display screen 30 may be made after step 300 and before step 305. Alternately, an optical code may not be borne on the imaged item, but a different symbol, such as a fingerprint, blood vessel pattern, or other suitable biometric, may be borne on or by the item. Processor 15, or a suitable processor operatively connected to processor 15, may analyze such a symbol to determine whether such a symbol is contained in a database of symbols, for identifying an individual, for example.

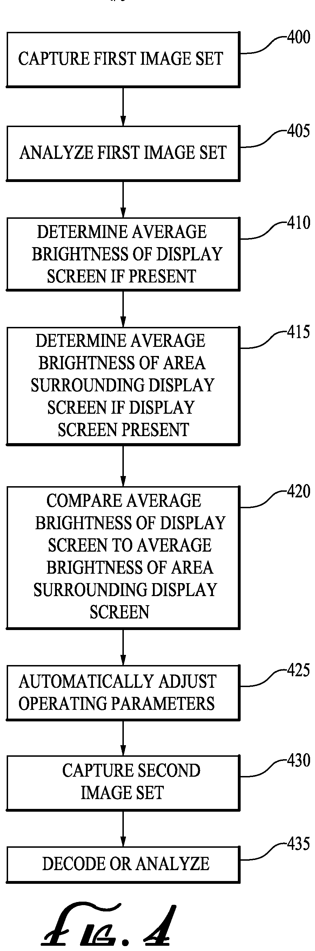

In alternate embodiments, two or more operating parameter sets may be used. For example, when processor 15 determines that an item is an electronic device, such as electronic device 32, with a display screen, such as display screen 30, additional processing may occur to determine whether the display screen is backlit or not. Figure 4 is a flow chart illustrating a preferred process having the following steps.
-- At step 400, capturing a first set of images of an item.
-- At step 405, analyzing the first set of images includes determining whether the item, such as electronic device 32, is in a recognized class, such as a class including electronic devices having display screens, glass bottles, and aluminum cans. Other recognized classes including similar or different types of items with relatively highly reflective surfaces may be used. If processor 15 determines there is an item in the recognized class in the read volume, processor 15 preferably continues to analyze the first set of images to determine if there is a display screen, for example, by looking for a nested geometric shape. Other suitable image analysis techniques may be used.
-- At step 410, analyzing portions of the first set of images, preferably by the processor 15, that include the display screen 30 to determine an average brightness for the display screen 30. For example, an average brightness for the display screen 30 may be determined by processor 15 determining which pixels captured a portion of the nested geometric shape and which pixels captured an image of the centroid of such nested geometric shape. Preferably, the grayscale value for the pixels used to capture the image of such a nested geometric shape is compared against the grayscale value of the pixels used to capture the image of the centroid of such a nested geometric shape to calculate an average brightness for the display screen 30.
-- At step 415, analyzing the portion of the image including the area 33 surrounding the display screen 30, preferably by the processor 15, to determine an average brightness for the area 33 surrounding the display screen 30. Preferably, processor 15 determines which pixels captured the image of the area 33, and determines an average brightness for the area 33, preferably by using a grayscale of such pixels. For example, thresholding may be applied to such a grayscale to create a binary image of the area 33 and the binary image can be processed to determine an average brightness.
-- At step 420, comparing the average brightness for the display screen 30 against the average brightness for the area 33 surrounding the display screen 30, preferably by the processor 15, to determine whether the display screen 30 is backlit or not. For example, processor 15 may compare the average brightness determined at step 410 against the average brightness determined at step 415. If the averages brightness determined at step 410 is substantially the same as the average brightness determined at step 415, for example, within a 25% difference, processor 15 may determine that the display screen 30 is not backlit. If the average brightness determined at step 410 is higher than the average brightness determined at step 415, for example, by more than about a 25% difference, processor 15 may determine that the display screen 30 is backlit.
-- At step 425, processor 15 automatically adjusting operating parameters for data reader 10. If processor 15 determines the item in the read volume is not in the recognized class, processor 15 establishes an initial set of operating parameters for use with items not in the recognized class when capturing a second set of images. If processor 15 determines there is an electronic device with a backlit electronic display, processor 15 establishes a secondary set of operating parameters for use with such electronic devices when capturing a second set of images. If processor 15 determines there is an electronic device with a display that is not backlit, processor 15 establishes a tertiary set of operating parameters for use with such electronic devices when capturing a second set of images. Preferably, (i) the initial set of operating parameters includes a gain setting, an exposure duration, and an illumination amount for data reader 10, (ii) the secondary set of operating parameters includes either one or both of a gain setting that is greater than the gain setting of the initial set and an exposure duration that is longer than the exposure duration of the initial set, and also includes an illumination amount that is less than the illumination amount of the initial set, and (iii) the tertiary set of operating parameters includes either one or both of a gain setting that is greater than the gain setting of the secondary set and an exposure duration that is longer than the exposure duration of the secondary set, and also includes an illumination amount that is less than the illumination amount of the secondary set. Sets of operating parameters may be automatically adjusted using (i) predefined parameters stored in a memory, (ii) parameters that are dynamically created in response to analysis of the first set of images, the second set of images, or both sets of images, or (iii) a combination of predefined and dynamically created operating parameters.
-- At step 430, the data reader 10 capturing a second set of images of electronic device 32 using the automatically adjusted operating parameters. The second set of images preferably includes two to five images, but may include only one image.
-- At step 435 an optical code 31 borne on display screen 30 is decoded, preferably by processor 15 or by a suitable processor operatively connected to processor 15. In an alternate embodiment, an attempt to decode the optical code 31 borne on display screen 30 may be made after step 400 and before step 405. Alternate embodiments may perform different analysis on the first set of captured images, and may include three, or more, sets of operating parameters.

In some embodiments, the data reader 10 may revert to an initial set of operating parameters after reading a label and a set number of image frames are captured during the second set of images, such as one, two, three, four, five, or more image frames. In other embodiments, the data reader 10 may continue to analyze the second set of images captured at step 430 to determine whether the processor 15 should automatically adjust operating parameters for data reader 10. If, during such analysis of the second set of images, processor 15 determines (1) the item in the read volume is not in the recognized class, (2) there is an electronic device with a backlit electronic display, or (3) there is an electronic device with a display that is not backlit, processor 15 establishes an appropriate set of operating parameters, for example as discussed above. The optical code 31 is decoded at step 435 and the data reader 10 may revert to an initial set of operating parameters after the remaining images of the second set of images are captured. Processes performed during steps 430 and 435 may be alternating, for example, decoding may be attempted after the capture of each image of the second set of images, or sequential, for example, decoding may be attempted after the capture of two or more images of the second set of images.

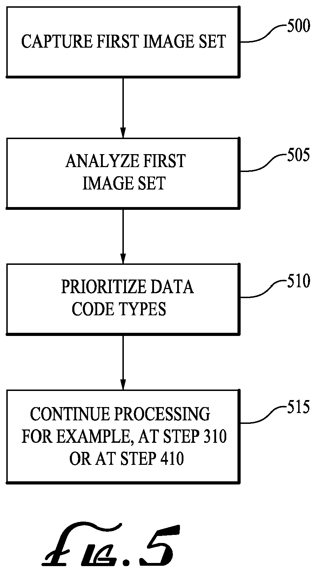

Figure 5 illustrates a flow chart for another preferred method. At step 500 a first set of images is captured in response to an item moving into a read volume in front of window 13 or in response to activation of trigger 18. The first set of images is analyzed at step 505 to identify the item. For example, image analysis programs or techniques described above may be used to identify the item, such as an ID card 40. Based on the identity of the item, the processor 15 prioritizes one or more types of expected optical code types for decoding at step 510. For example, many ID cards commonly bear a PDF 417 optical code. In response to identifying the item as an ID card, processor 15 may prioritize PDF 417 by ranking it as the first optical code type to attempt to decode. Alternately, processor 15 may prioritize PDF 417 by establishing a longer processing time for PDF 417 compared to the normal processing time allotted for PDF 417. Alternately, both ranking and processing time may be modified as a result of prioritizing. Such ranking and processing time modifications may occur for a single optical code type, or for multiple optical code types. Other item identity / optical code type associations may be used. Subsequent processing may occur as described above with respect to steps 310 through 320, with respect to steps 410 through 435, both described above, or other suitable steps.

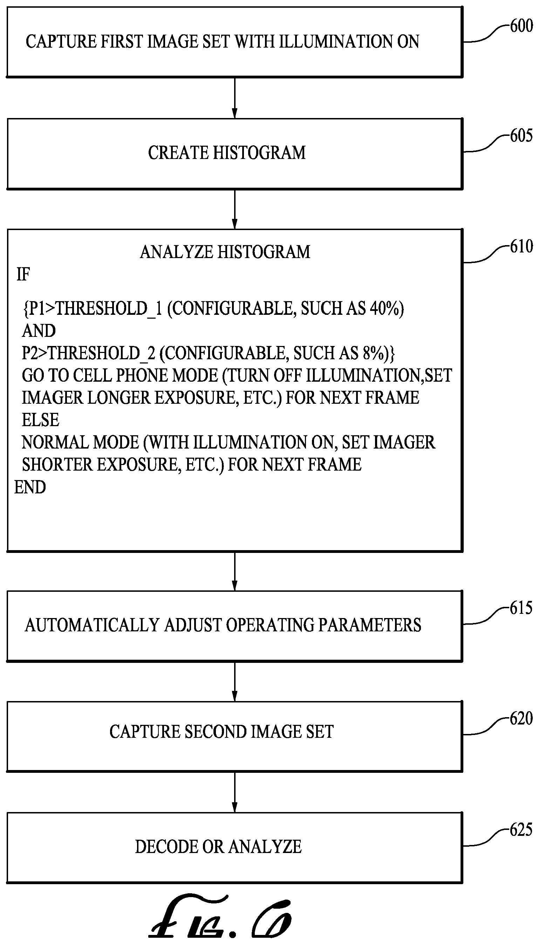

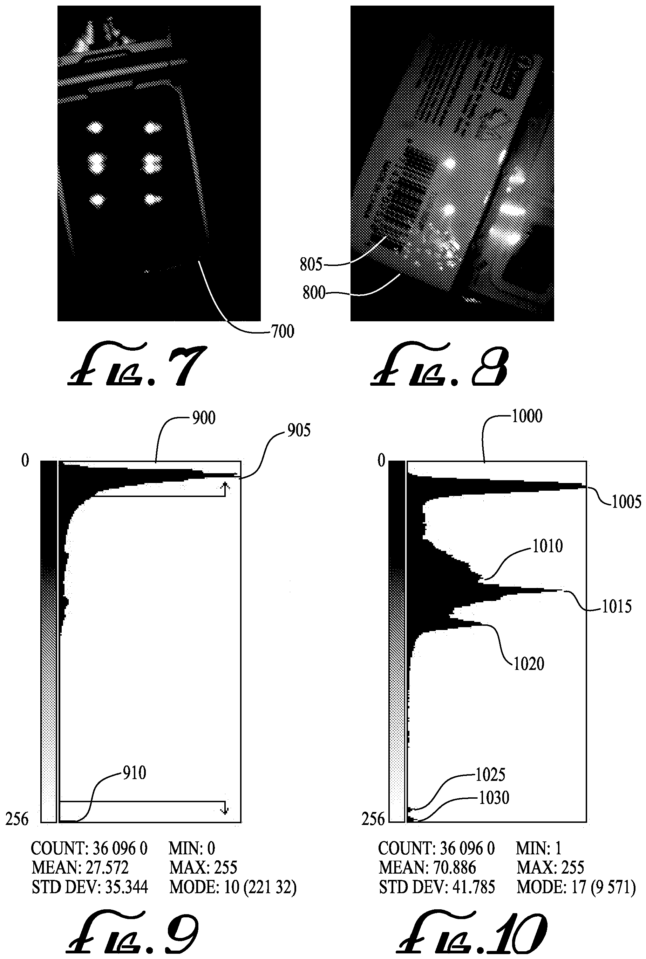

In alternate embodiments, image scene analysis may preferably include creating and analyzing a histogram of pixel levels for imager 20. For example, Figure 6 is a flow chart for an exemplary process for creating and analyzing a histogram representing exposure levels for pixels of imager 20, comprising the steps of:
-- At step 600, in response to an item bearing an optical code moving into a read volume in front of window 13 or in response to activation of trigger 18, a first set of images is captured with the illumination source 22 on. The first set of images may be of an item with a relatively highly reflective surface, such as an electronic device 700 with a display screen capable of bearing an optical code as illustrated in Figure 7. Alternately, the first set of images may be of an item with a less relatively highly specular reflective surface or a highly reflective but diffuse surface, such as a box 800 with a printed optical code 805 under a plastic sleeve as illustrated in Figure 8.
-- At step 605, a histogram is created based on the first set of images. Preferably the histogram corresponds to all or a subset of the pixels of imager 20. In a preferred embodiment, imager 20 creates a histogram representing the grayscale of each pixel of imager 20. Alternately, imager 20 creates a histogram for a subset of pixels, for example, those that make up a virtual scan line, and uses such a histogram of a subset of pixels as representative of all of the pixels of imager 20. Alternately, processor 15, or other suitable processor, may create histograms corresponding to saturation levels for each pixel, or a subset of pixels. An exemplary histogram corresponding to pixel saturation for the image illustrated in Figure 7 is illustrated in Figure 9. As illustrated in Figure 9, histogram 900 includes two distinct peaks 905 and 910. Peak 905 corresponds to a number of dark, and relatively dark, pixels. Peak 910 corresponds to a number of saturated, and relatively saturated, pixels, that is, pixels with a high and relatively high grayscale. An alternate, exemplary histogram corresponding to pixel saturation for the image illustrated in Figure 8 is illustrated in Figure 10. As illustrated in Figure 10, histogram 1000 includes more than two peaks, such as peaks 1005, 1010, 1015, 1020, 1025, and 1030. Peak 1005 corresponds to a number of dark, and relatively dark, pixels. Peaks 1005, 1010, 1015, 1020, 1025, and 1030 correspond to a number of pixels whose grayscale level falls between dark, and relatively dark, and saturated, and relatively saturated.
-- At step 610, processor 15 preferably analyzes the histogram created at step 605 to determine whether the histogram is bi-modal, i.e., exhibits two peaks, for example, as illustrated in Figure 9, or whether the histogram exhibits more than two peaks, for example, as illustrated in Figure 10. One exemplary manner for analyzing the histogram includes using, or establishing, a low threshold and a high threshold. Preferably the low threshold corresponds to a number representing a range of dark, or relatively dark, pixels (low to relatively low grayscale) and the high threshold corresponds to a number representing a range of saturated, or relatively saturated, pixels (high to relatively high grayscale).

For example, an imager that captures eight bit image data preferably includes a grayscale ranging from 0 to 255, where 0 corresponds to dark pixels, (i.e., pixels receiving no, or almost no light), and 255 corresponds to saturated pixels, (i.e., pixels receiving so much light that a pixel registers a white portion of an image, even when the corresponding part of the item imaged by such a pixel is not white). In one embodiment for an eight bit imager, a low threshold may include only pixels registering 0 on the grayscale and a high threshold may include only pixels registering 255 on the grayscale. Alternately, a low threshold may include pixels in a dark-end range on the grayscale, such as 0 to 10, 0 to 20, 0 to 30, 0 to 40, 0 to 50, 0 to 60, or other suitable range, and a high threshold may include pixels in a light-end range on the grayscale, such as 200 to 255, 210 to 255, 220 to 255, 230 to 255, 240 to 255, or other suitable range.

Processor 15 preferably determines whether a first predetermined percentage of pixels fall within the low threshold and whether a second predetermined percentage of pixels fall within the high threshold. For example, processor 15 preferably obtains or calculates a first number of pixels where each pixel has a grayscale value in the low threshold, such as 0 to 75, for example. Processor 15 preferably also obtains or calculates a second number of pixels where each pixel has a grayscale value in the high threshold, such as 235 to 255, for example. Processor 15 next determines whether the first number of pixels is greater than the first predetermined percentage of pixels and whether the second number of pixels is greater than the second predetermined percentage of pixels. In one embodiment, for an imager having 360,960 pixels (a 752x480 pixel grid), a low threshold of 0 to 75 the first predetermined percentage of pixels is 40% of the imager's total number of pixels and for a high threshold of 230 to 255 the second predetermined percentage of pixels is 8% of the imager's total number of pixels. Other suitable percentages may be used for the same low and high thresholds. Alternately, other suitable percentages, or the same percentages, may be used for other suitable low and high thresholds and for imagers having the same or a different total number of pixels.

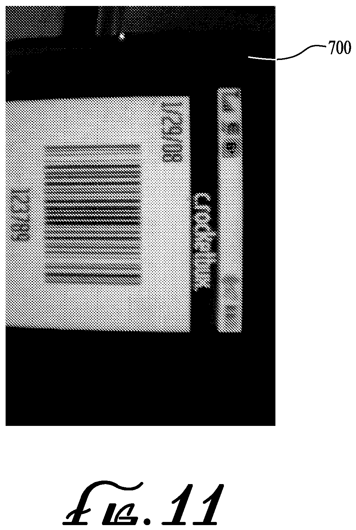

Steps 600, 605, and 610 may repeat several times, such as for five continuous frames, for example, to ensure that an electronic device, such as a cell phone, remains in the scan volume before the data reader changes one or more operating parameters, such as illumination, gain, or exposure duration.
-- At step 615, if the first number of pixels is greater than the first predetermined percentage of pixels and the second number of pixels is greater than the second predetermined percentage of pixels, processor 15 adjusts operating parameters for data reader 10, preferably by increasing the gain or exposure duration, or both, for imager 20 and by decreasing or turning off illumination from illumination source 22. If the first number of pixels is not greater than the first predetermined percentage of pixels or the second number of pixels is not greater than the second predetermined percentage of pixels, then processor 15 preferably does not adjust the operating parameters for data reader 10.
-- At step 620, data reader 10 captures a second set of images of an item bearing an optical code using either the adjusted, or non-adjusted, operating parameters based on the result of step 615. For example, if the imaged item includes a relatively highly reflective surface indicated by the first number of pixels being greater than the first predetermined percentage of pixels and the second number of pixels being greater than the second predetermined percentage of pixels, the second set of images of the item using the adjusted operating parameters preferably includes an image of the optical code with sufficient contrast to be decoded, such as illustrated in Figure 11, for example. Preferably, the optical code is decoded by processor 15 at step 625.

In some embodiments, the data reader 10 may revert to an initial set of operating parameters after reading a label and a set number of image frames are captured during the second set of images, such as one, two, three, four, five, or more image frames. In other embodiments, the data reader 10 may continue to analyze the second set of images captured at step 620, for example by repeating steps 605 and 610 for one or more images of the second set of images, to determine whether the processor 15 should automatically adjust operating parameters for data reader 10. If, during such analysis of the second set of images, processor 15 determines the operating parameters should be automatically adjusted, processor 15 appropriately adjusts the operating parameters, for example as discussed with respect to step 615. The optical code is decoded at step 625 and the data reader 10 may revert to an initial set of operating parameters after the remaining images of the second set of images are captured. Processes performed during steps 620 and 625 may be alternating, for example, decoding may be attempted after the capture of each image of the second set of images, or sequential, for example, decoding may be attempted after the capture of two or more images of the second set of images.

## Claims

1. A method for data reading comprising the steps of:
capturing, via a data reader (10), a first set of images of an item (30, 36, 39, 40) bearing an optical code (31, 37, 38, 41);
performing an analysis of the first set of images to determine whether the item (30, 36, 39, 40) is in a recognized item class consisting of objects bearing an optical code (31, 37, 38, 41) a) on a display screen, b) on or under a glass surface, c) on a metal surface having a reflectance of at least 30%, and d) on a plastic surface having a reflectance of at least 30%;
automatically setting adjusted operating parameters of the data reader (10) based on the analysis of the first set of images of whether the item (30, 36, 39, 40) is in the recognized item class;
capturing, via the data reader (10), a second set of images of the item (30, 36, 39, 40) bearing the optical code (31, 37, 38, 41) using the adjusted operating parameters; and
processing the second set of images to decode the optical code (31, 37, 38, 41) appearing in the second set of images of the item (30, 36, 39, 40).

2. A method according to claim 1, **characterized in that** processing the second set of images further includes:
performing an analysis of the second set of images to determine whether the item (30, 36, 39, 40) is in a recognized item class; and
automatically adjusting operating parameters of the data reader (10) based on the analysis of the second set of images of whether the item (30, 36, 39, 40) is in the recognized item class.

3. A method according to claim 1, **characterized in that** the step of performing an analysis of the first set of images includes recognizing a first shape nested within a similar second shape to identify an item (30, 36, 39, 40) bearing an optical code (31, 37, 38, 41) on a display screen (30).

4. A method according to claim 3, **characterized by** the steps of:
determining an average brightness of the first shape by the data reader (10);
determining an average brightness of an area surrounding the first shape by the data reader (10); and
comparing the average brightness of the first shape against the average brightness of the area surrounding the first shape to determine whether the display screen (30) is backlit;
wherein the step of setting adjusted operating parameters is further based on whether the display screen (30) is backlit.

5. A method according to claim 1, **characterized by**:
providing the data reader (10) with an initial operating parameter set that includes i) a baseline gain and exposure duration for an imager (20) and ii) an illumination setting for an illumination source (22);
wherein the step of automatically setting adjusted operating parameters includes;
a) if the item (30, 36, 39, 40) is in the recognized item class, establishing a secondary operating parameter set for capturing a second set of images wherein the secondary operating parameter set includes i) an increased one or both of a gain and an exposure duration for the imager (20) when compared to the initial operating parameter set and ii) a decreased illumination setting for the illumination source (22) when compared to the initial operating parameter set; and
b) if the item (30, 36, 39, 40) is not in the recognized item class, establishing the initial operating parameter set for capturing a second set of images.

6. A method according to claim 5 , **characterized in that** the step of automatically adjusting operating parameters further includes:
c) establishing the secondary operating parameter set for capturing a majority of the images and establishing the initial operating parameter set for capturing a minority of the images if the item (30, 36, 39, 40) is in the recognized item class; and
d) establishing the initial operating parameter set for capturing a majority of the images and establishing the secondary operating parameter set for capturing a minority of the images if the item (30, 36, 39, 40) is not in the recognized item class.

7. A method according to claim 1 , **characterized in that** the step of decoding the optical code (31, 37, 38, 41) includes automatically adjusting the data reader (10) to first attempt to decode a particular type of optical code (31, 37, 38, 41) based on whether the item (30, 36, 39, 40) is in the recognized item class.

8. A method according to claim 1 , **characterized in that**:
the step of performing analysis of the first set of images further includes identifying the item (30, 36, 39, 40); and
the step of decoding the optical code (31, 37, 38, 41) further includes automatically adjusting the data reader (10) to attempt to decode a particular type of optical code (31, 37, 38, 41) first based on identifying the item (30, 36, 39, 40).

9. A method according to claim 1, **characterized in that** the step of performing an analysis of the first set of images to determine whether the item (30, 36, 39, 40) is in a recognized item class comprises (1) creating a histogram (900, 1000) based on the first set of images and (2) analyzing the histogram (900, 1000) to determine whether the histogram (900, 1000) is bimodal;
wherein the step of automatically setting adjusted operating parameters of the data reader (10) based on the analysis of the first set of images of whether the item (30, 36, 39, 40) is in the recognized item class comprises automatically adjusting operating parameters of the data reader (10) based on whether the histogram (900, 1000) is bi-modal.

10. A method according to claim 9 , , **characterized in that** analyzing the histogram (900, 1000) to determine whether the histogram (900, 1000) is bi-modal includes:
comparing a first number of pixels against a predetermined grayscale low threshold percentage; and
comparing a second number of pixels against a predetermined grayscale high threshold percentage.

11. A system for data reading comprising:
an imager (20) for capturing an image of an item (30, 36, 39, 40) bearing an optical code (31, 37, 38, 41);
an illumination source (22) for illuminating the item (30, 36, 39, 40); and
a controller for operating the imager (20) and the illumination source (22), wherein the controller is programmed to,
operate the imager (20) to capture a first set of images of the item (30, 36, 39, 40) bearing an optical code (31, 37, 38, 41);
analyze the first set of images to determine whether the item (30, 36, 39, 40) is in a recognized item class consisting of objects bearing an optical code (31, 37, 38, 41) a) on a display screen, b) on or under a glass surface, c) on a metal surface having a reflectance of at least 30%, and d) on a plastic surface having a reflectance of at least 30%;
automatically adjust operating parameters of the imager (20) and the illumination source (22) based on whether the item (30, 36, 39, 40) is in the recognized item class;
operate the imager (20) to capture a second set of images of the item (30, 36, 39, 40) using the adjusted operating parameters; and
analyze the optical code (31, 37, 38, 41) appearing in the second set of images of the item (30, 36, 39, 40).

12. A system for data reading according to claim 11, **characterized in that** the controller is further programmed to:
recognize a combination of a first shape nested within a similar second shape as a nested shape to identify an item (30, 36, 39, 40) bearing an optical code (31, 37, 38, 41) on a display screen when analyzing the first set of images.

13. A system for data reading according to claim 12, **characterized in that** the controller is further programmed to:
determine an average brightness of the first shape when analyzing the first set of images;
determine an average brightness of an area surrounding the first shape when analyzing the first set of images;
compare the average brightness of the first shape against the average brightness of the area surrounding the first shape to determine whether the display screen is backlit when analyzing the first set of images; and
wherein the programming to automatically adjust operating parameters of the imager (20) is further based on whether the display screen (30) is backlit.

14. A system for data reading according to claim 11, **characterized by** an initial operating parameter set including i) a baseline gain and exposure duration for the imager (20) and ii) an illumination setting for the illumination source (22), and the controller is further programmed to:
if the item (30, 36, 39, 40) is in the recognized item class, establish a secondary operating parameter set to capture a second set of images wherein the secondary operating parameter set includes i) an increased one or both of a gain and an exposure duration for the imager (20) when compared to the initial operating parameter set and ii) a decreased illumination setting for the illumination source (22) when compared to the initial operating parameter set; and
if the item (30, 36, 39, 40) is not in the recognized item class, establish the initial operating parameter set to capture a second set of images.

15. A system for data reading according to claim 14, **characterized in that** the controller is further programmed to:
establish the secondary operating parameter set to capture a majority of the images and establish the initial operating parameter set to capture a minority of the images if the item (30, 36, 39, 40) is in the recognized item class; and
establish the initial operating parameter set to capture a majority of the images and establish the secondary operating parameter set to capture a minority of the images if the item (30, 36, 39, 40) is not in the recognized item class; and, optionally
establish the secondary operating parameter set to capture about 75% of the images and establish the initial operating parameter set to capture about 25% of the images if the item (30, 36, 39, 40) is in the recognized item class; and
establish the initial operating parameter set to capture about 75% of the images and establish the secondary operating parameter set to capture about 25% of the images if the item (30, 36, 39, 40) is not in the recognized item class.

16. A system for data reading according to claim 11, **characterized in that** the controller is further programmed to decode the optical code (31, 37, 38, 41) including automatically attempting to decode a particular type of optical code (31, 37, 38, 41) first based on whether the item (30, 36, 39, 40) is in the recognized item class.

17. A system for data reading according to claim 11 will , **characterized in that** the controller is further programmed to:
analyze the first set of images to identify the item (30, 36, 39, 40); and
decode the optical code (31, 37, 38, 41) including automatically attempting to decode a particular type of optical code (31, 37, 38, 41) first based on identifying the item (30, 36, 39, 40).

## Patentansprüche

1. Verfahren zum Lesen von Daten, umfassend die Schritte:
Erfassen, über ein Datenlesegerät (10), eines ersten Satzes von Bildern eines Gegenstands (30, 36, 39, 40), der einen optischen Code (31, 37, 38, 41) trägt;
Durchführen einer Analyse des ersten Satzes von Bildern, um zu bestimmen, ob der Gegenstand (30, 36, 39, 40) zu einer anerkannten Gegenstandsklasse gehört, die aus Objekten besteht, die einen optischen Code (31, 37, 38, 41) a) auf einem Anzeigebildschirm, b) auf oder unter einer Glasoberfläche, c) auf einer Metalloberfläche mit einem Reflexionsvermögen von mindestens 30 % und d) auf einer Kunststoffoberfläche mit einem Reflexionsvermögen von mindestens 30 % tragen;
automatisches Einstellen angepasster Betriebsparameter des Datenlesegeräts (10) basierend auf der Analyse des ersten Satzes von Bildern, ob der Gegenstand (30, 36, 39, 40) zu der anerkannten Gegenstandsklasse gehört;
Erfassen, über das Datenlesegerät (10), eines zweiten Satzes von Bildern des Gegenstands (30, 36, 39, 40), der den optischen Code (31, 37, 38, 41) trägt unter Verwendung der angepassten Betriebsparameter; und Verarbeiten des zweiten Satzes von Bildern, um den optischen Code (31, 37,38, 41) zu decodieren, der in dem zweiten Satz von Bildern des Gegenstands (30, 36, 39, 40) erscheint.

2. Verfahren nach Anspruch 1, **dadurch gekennzeichnet, dass** das Verarbeiten des zweiten Satzes von Bildern ferner umfasst:
Durchführen einer Analyse des zweiten Satzes von Bildern, um zu bestimmen, ob der Gegenstand (30, 36, 39, 40) zu einer anerkannten Gegenstandsklasse gehört; und
automatisches Anpassen der Betriebsparameter des Datenlesegeräts (10) basierend auf der Analyse des ersten Satzes von Bildern, ob der Gegenstand (30, 36, 39, 40) zu der anerkannten Gegenstandsklasse gehört.

3. Verfahren nach Anspruch 1, **dadurch gekennzeichnet, dass** der Schritt des Durchführens einer Analyse des ersten Satzes von Bildern das Erkennen einer ersten Form einschließt, die in einer ähnlichen zweiten Form verschachtelt ist, um einen Gegenstand (30, 36, 39, 40) zu identifizieren, der einen optischen Code (31, 37, 38, 41) auf einem Anzeigebildschirm (30) trägt.

4. Verfahren nach Anspruch 3, **gekennzeichnet durch** die Schritte: Bestimmen einer durchschnittlichen Helligkeit der ersten Form durch das Datenlesegerät (10);
Bestimmen einer durchschnittlichen Helligkeit eines Bereichs, der die erste Form umgibt, durch das Datenlesegerät (10); und
Vergleichen der durchschnittlichen Helligkeit der ersten Form mit der durchschnittlichen Helligkeit des Bereichs, der die erste Form umgibt, um zu bestimmen, ob der Anzeigebildschirm (30) hintergrundbeleuchtet ist;
wobei der Schritt des Einstellens angepasster Betriebsparameter ferner darauf basiert, ob der Anzeigebildschirm (30) hintergrundbeleuchtet ist.

5. Verfahren nach Anspruch 1, **gekennzeichnet durch**:
Bereitstellen des Datenlesegeräts (10) mit einem anfänglichen Betriebsparametersatz, der i) eine Grundlinienverstärkung und Belichtungsdauer für einen Bildgeber (20) und ii) eine Beleuchtungseinstellung für eine Beleuchtungsquelle (22) einschließt;
wobei der Schritt des automatischen Einstellens angepasster Betriebsparameter einschließt;
a) wenn der Gegenstand (30, 36, 39, 40) zu der anerkannten Gegenstandsklasse gehört,
Einrichten eines sekundären Betriebsparametersatzes zum Erfassen eines zweiten Satzes von Bildern, wobei der sekundäre Betriebsparametersatz i) eine Erhöhung von einem oder beiden einer Verstärkung und einer Belichtungsdauer für den Bildgeber (20) im Vergleich zu dem anfänglichen Betriebsparametersatz und ii) eine verringerte Beleuchtungseinstellung für die Beleuchtungsquelle (22) im Vergleich zu dem anfänglichen Betriebsparametersatz einschließt; und
b) wenn der Gegenstand (30, 36, 39, 40) nicht zu der anerkannten Gegenstandsklasse gehört, Einrichten des anfänglichen Betriebsparametersatzes zum Erfassen eines zweiten Satzes von Bildern.

6. Verfahren nach Anspruch 5, **dadurch gekennzeichnet, dass** der Schritt des automatischen Anpassens der Betriebsparameter ferner einschließt:
c) Einrichten des sekundären Betriebsparametersatzes zum Erfassen einer Mehrheit der Bilder und Einrichten des anfänglichen Betriebsparametersatzes zum Erfassen einer Minderheit der Bilder, wenn der Gegenstand (30, 36, 39, 40) zu der anerkannten Gegenstandsklasse gehört; und
d) Einrichten des anfänglichen Betriebsparametersatzes zum Erfassen einer Mehrheit der Bilder und Einrichten des sekundären Betriebsparametersatzes zum Erfassen einer Minderheit der Bilder, wenn der Gegenstand (30, 36, 39, 40) nicht zu der anerkannten Gegenstandsklasse gehört.

7. Verfahren nach Anspruch 1, **dadurch gekennzeichnet, dass** der Schritt des Decodierens des optischen Codes (31, 37, 38, 41) das automatische Einstellen des Datenlesegeräts (10) einschließt, um zuerst zu versuchen, einen bestimmten Typ eines optischen Codes (31, 37, 38, 41) zu decodieren, basierend darauf, ob der Gegenstand (30, 36, 39, 40) zu der anerkannten Gegenstandsklasse gehört.

8. Verfahren nach Anspruch 1, **dadurch gekennzeichnet, dass**:
der Schritt des Durchführens einer Analyse des ersten Satzes von Bildern ferner das Identifizieren des Gegenstands (30, 36, 39, 40) einschließt; und
der Schritt des Decodierens des optischen Codes (31, 37, 38, 41) ferner das automatische Anpassen des Datenlesegeräts (10) einschließt, um zu versuchen, einen bestimmten Typ eines optischen Codes (31, 37, 38, 41) zuerst basierend auf dem Identifizieren des Gegenstands (30, 36, 39, 40) zu decodieren.

9. Verfahren nach Anspruch 1, **dadurch gekennzeichnet, dass** der Schritt des Durchführens einer Analyse des ersten Satzes von Bildern, um zu bestimmen, ob der Gegenstand (30, 36, 39, 40) zu einer anerkannten Gegenstandsklasse gehört, (1) das Erzeugen eines Histogramms (900, 1000) basierend auf dem ersten Satz von Bilder und (2) das Analysieren des Histogramms (900, 1000), um zu bestimmen, ob das Histogramm (900, 1000) bimodal ist, umfasst;
wobei der Schritt des automatischen Einstellens angepasster Betriebsparameter des Datenlesegeräts (10) basierend auf der Analyse des ersten Satzes von Bildern, ob der Gegenstand (30, 36, 39, 40) zu der anerkannten Gegenstandsklasse gehört, das automatische Anpassen von Betriebsparametern des Datenlesegeräts (10) basierend darauf, ob das Histogramm (900, 1000) bimodal ist, umfasst.

10. Verfahren nach Anspruch 9, **dadurch gekennzeichnet, dass** das Analysieren des Histogramms (900, 1000), um zu bestimmen, ob das Histogramm (900, 1000) bimodal ist, einschließt:
Vergleichen einer ersten Anzahl von Pixeln mit einem vorbestimmten niedrigen Graustufenschwellenprozentsatz; und
Vergleichen einer zweiten Anzahl von Pixeln mit einem vorbestimmten hohen Graustufenschwellenprozentsatz.

11. System zum Lesen von Daten, umfassend:
einen Bildgeber (20) zum Erfassen eines Bildes eines Gegenstands (30, 36, 39, 40), der einen optischen Code (31, 37, 38, 41) trägt;
eine Beleuchtungsquelle (22) zum Beleuchten des Gegenstands (30, 36, 39, 40); und
eine Steuerung zum Betreiben des Bildgebers (20) und der Beleuchtungsquelle (22), wobei die Steuerung programmiert ist, um
den Bildgeber (20) zu betreiben, um einen ersten Satz von Bildern des Gegenstands (30, 36, 39, 40), der einen optischen Code (31, 37, 38, 41) trägt, aufzunehmen;
Analysieren des ersten Satzes von Bildern, um zu bestimmen, ob der Gegenstand (30, 36, 39, 40) zu einer anerkannten Gegenstandsklasse gehört, die aus Objekten besteht, die einen optischen Code (31, 37, 38, 41) a) auf einem Anzeigebildschirm,
b)
auf oder unter einer Glasoberfläche, c) auf einer Metalloberfläche mit einem Reflexionsvermögen von mindestens 30 % und d) auf einer Kunststoffoberfläche mit einem Reflexionsvermögen von mindestens 30 % tragen;
automatisches Anpassen der Betriebsparameter des Bildgebers (20) und der Beleuchtungsquelle (22) basierend darauf, ob der Gegenstand (30, 36, 39, 40) zu der anerkannten Gegenstandsklasse gehört;
Betreiben des Bildgebers (20) zum Erfassen eines zweiten Satzes von Bildern des Gegenstands (30, 36, 39, 40) unter Verwendung der angepassten Betriebsparameter; und
Analysieren des optischen Codes (31, 37, 38, 41), der in dem zweiten Satz von Bildern des Gegenstands (30, 36, 39, 40) erscheint.

12. System zum Lesen von Daten nach Anspruch 11, **dadurch gekennzeichnet, dass** die Steuerung ferner programmiert ist zum:
Erkennen einer Kombination einer ersten Form, die in einer ähnlichen zweiten Form verschachtelt ist, als eine verschachtelte Form, um einen Gegenstand (30, 36, 39, 40) zu identifizieren, der einen optischen Code (31, 37, 38, 41) auf einem Anzeigebildschirm trägt, wenn der erste Satz von Bildern analysiert wird.

13. System zum Lesen von Daten nach Anspruch 12, **dadurch gekennzeichnet, dass** die Steuerung ferner programmiert ist zum:
Bestimmen einer durchschnittlichen Helligkeit der ersten Form, wenn der erste Satz von Bildern analysiert wird;
Bestimmen einer durchschnittlichen Helligkeit eines Bereichs, der die erste Form umgibt, wenn der erste Satz von Bildern analysiert wird;
Vergleichen der durchschnittlichen Helligkeit der ersten Form mit der durchschnittlichen Helligkeit des Bereichs, der die erste Form umgibt, um zu bestimmen, ob der Anzeigebildschirm hintergrundbeleuchtet ist, wenn der erste Satz von Bildern analysiert wird; und
wobei das Programmieren zum automatischen Anpassen von Betriebsparametern des Bildgebers (20) ferner darauf basiert, ob der Anzeigebildschirm (30) hintergrundbeleuchtet ist.

14. System zum Lesen von Daten nach Anspruch 11, **gekennzeichnet durch** einen anfänglichen Betriebsparametersatz, der i) eine Grundlinienverstärkung und eine Belichtungsdauer für den Bildgeber (20) und ii) eine Beleuchtungseinstellung für die
Beleuchtungsquelle (22) einschließt, und die Steuerung ist ferner programmiert zum:
wenn der Gegenstand (30, 36, 39, 40) zu der anerkannten Gegenstandsklasse gehört, Einrichten eines sekundären Betriebsparametersatzes zum Erfassen eines zweiten Satzes von Bildern, wobei der sekundäre Betriebsparametersatz i) eine Erhöhung von einem oder beiden einer Verstärkung und einer Belichtungsdauer für den Bildgeber (20) im Vergleich zu dem anfänglichen Betriebsparametersatz und ii) eine verringerte Beleuchtungseinstellung für die Beleuchtungsquelle (22) im Vergleich zu dem anfänglichen Betriebsparametersatz einschließt; und
wenn der Gegenstand (30, 36, 39, 40) nicht zu der anerkannten Gegenstandsklasse gehört, Einrichten des anfänglichen Betriebsparametersatzes zum Erfassen eines zweiten Satzes von Bildern.

15. System zum Lesen von Daten nach Anspruch 14, **dadurch gekennzeichnet, dass** die Steuerung ferner programmiert ist zum:
Einrichten des sekundären Betriebsparametersatzes zum Erfassen einer Mehrheit der Bilder und Einrichten des anfänglichen Betriebsparametersatzes zum Erfassen einer Minderheit der Bilder, wenn der Gegenstand (30, 36, 39, 40) zu der anerkannten Gegenstandsklasse gehört; und
Einrichten des anfänglichen Betriebsparametersatzes zum Erfassen einer Mehrheit der Bilder und Einrichten des sekundären Betriebsparametersatzes zum Erfassen einer Minderheit der Bilder, wenn der Gegenstand (30, 36, 39, 40) nicht zu der anerkannten Gegenstandsklasse gehört; und gegebenenfalls
Einrichten des sekundären Betriebsparametersatzes zum Erfassen von etwa 75 % der Bilder und Einrichten des anfänglichen Betriebsparametersatzes zum Erfassen von etwa 25 % der Bilder, wenn der Gegenstand (30, 36, 39, 40) zu der anerkannten Gegenstandsklasse gehört; und
Einrichten des anfänglichen Betriebsparametersatzes zum Erfassen von etwa 75 % der Bilder und Einrichten des sekundären Betriebsparametersatzes zum Erfassen von etwa 25 % der Bilder, wenn der Gegenstand (30, 36, 39, 40) nicht zu der anerkannten Gegenstandsklasse gehört.

16. System zum Lesen von Daten nach Anspruch 11, **dadurch gekennzeichnet, dass** die Steuerung ferner programmiert ist zum Decodieren des optischen Codes (31, 37, 38, 41), einschließlich des automatischen Versuchs, zuerst einen bestimmten Typ eines optischen Codes (31, 37, 38, 41) zu decodieren, basierend darauf, ob der Gegenstand (30, 36, 39, 40) zu der anerkannten Gegenstandsklasse gehört.

17. System zum Lesen von Daten nach Anspruch 11, **dadurch gekennzeichnet, dass** die Steuerung ferner programmiert ist zum:
Analysieren des ersten Satzes von Bildern, um den Gegenstand (30, 36, 39, 40) zu identifizieren; und
Decodieren des optischen Codes (31, 37, 38, 41), einschließlich des automatischen Versuchs, einen bestimmten Typ eines optischen Codes (31, 37, 38, 41) zuerst basierend auf dem Identifizieren des Gegenstands (30, 36, 39, 40) zu decodieren.

## Revendications

1. Procédé de lecture de données comprenant les étapes consistant à :
capturer, via un lecteur de données (10), un premier ensemble d'images d'un article (30, 36, 39, 40) portant un code optique (31, 37, 38, 41) ;
mettre en œuvre une analyse du premier ensemble d'images pour déterminer si l'article (30, 36, 39, 40) est dans une classe d'article reconnue constituée d'objets portant un code optique (31, 37, 38, 41) a) sur un écran d'affichage, b) sur ou sous une surface en verre, c) sur une surface en métal ayant une réflectance d'au moins 30 %, et d) sur une surface en plastique ayant une réflectance d'au moins 30 % ;
régler automatiquement des paramètres opérationnels ajustés du lecteur de données (10) sur la base de l'analyse du premier ensemble d'images concernant le fait de savoir si l'article (30, 36, 39, 40) est dans la classe d'article reconnue ;
capturer, via le lecteur de données (10), un deuxième ensemble d'images de l'article (30, 36, 39, 40) portant le code optique (31, 37, 38, 41) en utilisant les paramètres opérationnels ajustés ; et
traiter le deuxième ensemble d'images pour décoder le code optique (31, 37, 38, 41) apparaissant dans le deuxième ensemble d'images de l'article (30, 36, 39, 40).

2. Procédé selon la revendication 1, **caractérisé en ce que** le traitement du deuxième ensemble d'images inclut en outre :
la mise en œuvre d'une analyse du deuxième ensemble d'images pour déterminer si l'article (30, 36, 39, 40) est dans une classe d'article reconnue ; et
l'ajustement automatique des paramètres opérationnels du lecteur de données (10) sur la base de l'analyse du deuxième ensemble d'images concernant le fait de savoir si l'article (30, 36, 39, 40) est dans la classe d'article reconnue.

3. Procédé selon la revendication 1, **caractérisé en ce que** l'étape de mise en œuvre d'une analyse du premier ensemble d'images inclut la reconnaissance d'une première forme imbriquée au sein d'une deuxième forme similaire pour identifier un article (30, 36, 39, 40) portant un code optique (31, 37, 38, 41) sur un écran d'affichage (30).

4. Procédé selon la revendication 3, **caractérisé par** les étapes consistant à :
déterminer une luminosité moyenne de la première forme par le lecteur de données (10) ;
déterminer une luminosité moyenne d'une zone entourant la première forme par le lecteur de données (10) ; et
comparer la luminosité moyenne de la première forme par rapport à la luminosité moyenne de la zone entourant la première forme pour déterminer si l'écran d'affichage (30) est rétroéclairé ;
dans lequel l'étape de réglage des paramètres opérationnels ajustés est en outre basée sur le fait de savoir si l'écran d'affichage (30) est rétroéclairé.

5. Procédé selon la revendication 1, **caractérisé par** :
la fourniture au lecteur de données (10) d'un jeu de paramètres opérationnels initiaux qui inclut i) un gain de ligne de base et une durée d'exposition pour un imageur (20) et ii) un réglage d'éclairage pour une source d'éclairage (22) ;
dans lequel l'étape de réglage automatique des paramètres opérationnels ajustés inclut ;
a) si l'article (30, 36, 39, 40) est dans la classe d'article reconnue,
l'établissement d'un ensemble de paramètres opérationnels secondaires pour capturer un deuxième ensemble d'images dans lequel l'ensemble de paramètres opérationnels secondaires inclut i) l'un et/ou l'autre augmentés parmi un gain et une durée d'exposition pour l'imageur (20) par comparaison avec l'ensemble de paramètres opérationnels initiaux et ii) un réglage d'éclairage diminué pour la source d'éclairage (22) par comparaison avec l'ensemble de paramètres opérationnels initiaux ; et
b) si l'article (30, 36, 39, 40) n'est pas dans la classe d'article reconnue, l'établissement de l'ensemble de paramètres opérationnels initiaux pour capturer un deuxième ensemble d'images.

6. Procédé selon la revendication 5, **caractérisé en ce que** l'étape d'ajustement automatique des paramètres opérationnels inclut en outre :
c) l'établissement de l'ensemble de paramètres opérationnels secondaires pour capturer une majorité des images et l'établissement de l'ensemble de paramètres opérationnels initiaux pour capturer une minorité des images si l'article (30, 36, 39, 40) est dans la classe d'article reconnue ; et
d) l'établissement de l'ensemble de paramètres opérationnels initiaux pour capturer une majorité des images et l'établissement de l'ensemble de paramètres opérationnels secondaires pour capturer une minorité des images si l'article (30, 36, 39, 40) n'est pas dans la classe d'article reconnue.

7. Procédé selon la revendication 1, **caractérisé en ce que** l'étape de décodage du code optique (31, 37, 38, 41) inclut l'ajustement automatique du lecteur de données (10) pour tenter d'abord de décoder un type particulier de code optique (31, 37, 38, 41) sur la base du fait que l'article (30, 36, 39, 40) est dans la classe d'article reconnue.

8. Procédé selon la revendication 1, **caractérisé en ce que** :
l'étape de mise en œuvre d'une analyse du premier ensemble d'images inclut en outre l'identification de l'article (30, 36, 39, 40) ; et
l'étape de décodage du code optique (31, 37, 38, 41) inclut en outre l'ajustement automatique du lecteur de données (10) pour tenter de décoder un type particulier de code optique (31, 37, 38, 41) sur la base d'abord de l'identification de l'article (30, 36, 39, 40).

9. Procédé selon la revendication 1, **caractérisé en ce que** l'étape de mise en œuvre d'une analyse du premier ensemble d'images pour déterminer si l'article (30, 36, 39, 40) est dans une classe d'article reconnue comprend (1) la création d'un histogramme (900, 1000) sur la base du premier ensemble d'images et (2) l'analyse de l'histogramme (900, 1000) pour déterminer si l'histogramme (900, 1000) est bimodal ;
dans lequel l'étape de réglage automatique des paramètres opérationnels ajustés du lecteur de données (10) sur la base de l'analyse du premier ensemble d'images concernant le fait de savoir si l'article (30, 36, 39, 40) est dans la classe d'article reconnue comprend l'ajustement automatique des paramètres opérationnels du lecteur de données (10) sur la base du fait que l'histogramme (900, 1000) est bimodal.

10. Procédé selon la revendication 9, **caractérisé en ce que** l'analyse de l'histogramme (900, 1000) pour déterminer si l'histogramme (900, 1000) est bimodal inclut :
la comparaison d'un premier nombre de pixels par rapport à un pourcentage prédéfini de seuil bas de nuances de gris; et
la comparaison d'un deuxième nombre de pixels par rapport à un pourcentage prédéfini de seuil haut de nuances de gris.

11. Système de lecture de données, comprenant :
un imageur (20) pour capturer une image d'un article (30, 36, 39, 40) portant un code optique (31, 37, 38, 41);
une source d'éclairage (22) pour éclairer l'article (30, 36, 39, 40) ; et
un dispositif de commande pour faire fonctionner l'imageur (20) et la source d'éclairage (22), dans lequel le dispositif de commande est programmé pour,
faire fonctionner l'imageur (20) pour capturer un premier ensemble d'images de l'article (30, 36, 39, 40) portant un code optique (31, 37, 38, 41) ;
analyser le premier ensemble d'images pour déterminer si l'article (30, 36, 39, 40) est dans une classe d'article reconnue constituée d'objets portant un code optique (31, 37, 38, 41) a) sur un écran d'affichage,
b)
sur ou sous une surface en verre, c) sur une surface en métal ayant une réflectance d'au moins 30 %, et d) sur une surface en plastique ayant une réflectance d'au moins 30 % ;
ajuster automatiquement des paramètres opérationnels de l'imageur (20) et de la source d'éclairage (22) sur la base du fait que l'article (30, 36, 39, 40) est dans la classe d'article reconnue ;
faire fonctionner l'imageur (20) pour capturer un deuxième ensemble d'images de l'article (30, 36, 39, 40) en utilisant les paramètres opérationnels ajustés ; et
analyser le code optique (31, 37, 38, 41) apparaissant dans le deuxième ensemble d'images de l'article (30, 36, 39, 40).

12. Système de lecture de données selon la revendication 11, **caractérisé en ce que** le dispositif de commande est en outre programmé pour :
reconnaître une combinaison d'une première forme imbriquée au sein d'une deuxième forme similaire en tant que forme imbriquée pour identifier un article (30, 36, 39, 40) portant un code optique (31, 37, 38, 41) sur un écran d'affichage lors de l'analyse du premier ensemble d'images.

13. Système de lecture de données selon la revendication 12, **caractérisé en ce que** le dispositif de commande est en outre programmé pour :
déterminer une luminosité moyenne de la première forme lors de l'analyse du premier ensemble d'images ;
déterminer une luminosité moyenne d'une zone entourant la première forme lors de l'analyse du premier ensemble d'images ;
comparer la luminosité moyenne de la première forme par rapport à la luminosité moyenne de la zone entourant la première forme pour déterminer si l'écran d'affichage est rétroéclairé lors de l'analyse du premier ensemble d'images ; et
dans lequel la programmation pour ajuster automatiquement des paramètres opérationnels de l'imageur (20) est en outre basée sur le fait de savoir si l'écran d'affichage (30) est rétroéclairé.

14. Système de lecture de données selon la revendication 11, **caractérisé par** un ensemble de paramètres opérationnels initiaux incluant i) un gain de ligne de base et une durée d'exposition pour l'imageur (20) et ii) un réglage d'éclairage pour la
source d'éclairage (22), et le dispositif de commande est en outre programmé pour :
si l'article (30, 36, 39, 40) est dans la classe d'article reconnue, établir un ensemble de paramètres opérationnels secondaires pour capturer un deuxième ensemble d'images dans lequel l'ensemble de paramètres opérationnels secondaires inclut i) l'un et/ou l'autre augmentés parmi un gain et une durée d'exposition pour l'imageur (20) par comparaison avec l'ensemble de paramètres opérationnels initiaux et ii) un réglage d'éclairage diminué pour la source d'éclairage (22) par comparaison avec l'ensemble de paramètres opérationnels initiaux ; et
si l'article (30, 36, 39, 40) n'est pas dans la classe d'article reconnue, établir l'ensemble de paramètres opérationnels initiaux pour capturer un deuxième ensemble d'images.

15. Système de lecture de données selon la revendication 14, **caractérisé en ce que** le dispositif de commande est en outre programmé pour :
établir l'ensemble de paramètres opérationnels secondaires pour capturer une majorité des images et établir l'ensemble de paramètres opérationnels secondaires pour capturer une minorité des images si l'article (30, 36, 39, 40) est dans la classe d'article reconnue ; et
établir l'ensemble de paramètres opérationnels initiaux pour capturer une majorité des images et établir l'ensemble de paramètres opérationnels secondaires pour capturer une minorité des images si l'article (30, 36, 39, 40) n'est pas dans la classe d'article reconnue ; et, éventuellement
établir l'ensemble de paramètres opérationnels secondaires pour capturer environ 75 % des images et établir l'ensemble de paramètres opérationnels initiaux pour capturer environ 25 % des images si l'article (30, 36, 39, 40) est dans la classe d'article reconnue ; et
établir l'ensemble de paramètres opérationnels initiaux pour capturer environ 75 % des images et établir l'ensemble de paramètres opérationnels secondaires pour capturer environ 25 % des images si l'article (30, 36, 39, 40) n'est pas dans la classe d'article reconnue.

16. Système de lecture de données selon la revendication 11, **caractérisé en ce que** le dispositif de commande est en outre programmé pour décoder le code optique (31, 37, 38, 41) incluant une tentative automatique pour décoder un type particulier de code optique (31, 37, 38, 41) sur la base d'abord du fait que l'article (30, 36, 39, 40) est dans la classe d'article reconnue.

17. Système de lecture de données selon la revendication 11 devra, **caractérisé en ce que** le dispositif de commande est en outre programmé pour :
analyser le premier ensemble d'images pour identifier l'article (30, 36, 39, 40) ; et
décoder le code optique (31, 37, 38, 41) incluant une tentative automatique pour décoder un type particulier de code optique (31, 37, 38, 41) sur la base d'abord d'une identification de l'article (30, 36, 39, 40).
